# EUROPÄISCHE PATENTANMELDUNG

(11) **EP 1 136 299 A2**
(43) Veröffentlichungstag der Anmeldung: **26.09.2001**
(21) Anmeldenummer: 01103801.5
(22) Anmeldetag: 16.02.2001
(51) Int. Cl.: B60K 15/035

(54) **Entlüftungseinrichtung für einen Kraftstoffbehälter**

(30) Priorität: 21.03.2000 DE 10013919
(71) Anmelder: Mannesmann VDO Aktiengesellschaft, 60388 Frankfurt am Main (DE)
(72) Erfinder: Zapp, Thomas, Dr., 44265 Dortmund (DE)
(74) Vertreter: Barz, Torsten (DE)

(57) **Zusammenfassung**

Bei einer Entlüftungseinrichtung (3) für einen Kraftstoffbehälter (1) ist eine außerhalb des Kraftstoffbehälters (1) befindliche Leitung (10) einer Betriebsentlüftung innerhalb einer Leitung (11) einer Betankungsentlüftung angeordnet. Hierdurch hat die Leitung (10) der Betriebsentlüftung keinen unmittelbaren Kontakt mit der Umgebung. Ein Entweichen von Kraftstoffdämpfen in die Umgebung wird hierdurch besonders gering gehalten.

## Beschreibung

Die Erfindung betrifft eine Entlüftungseinrichtung für einen Kraftstoffbehälter eines Kraftfahrzeuges mit jeweils einer aus dem Kraftstoffbehälter heraus geführten Leitung für eine Betriebsentlüftung und für eine Betankungsentlüftung.

Solche Entlüftungseinrichtungen werden in Kraftstoffbehältern heutiger Kraftfahrzeuge häufig eingesetzt und sind aus der Praxis bekannt. Hierbei werden die Leitungen jeweils zu einem nahe eines Einfüllstutzens des Kraftstoffbehälters vorgesehenen Ausgleichsbehälter geführt. Die Ausgleichsbehälter haben zudem jeweils über einen gemeinsamen Aktivkohlefilter eine Verbindung mit der Umwelt. Über die Ausgleichsbehälter und die Leitungen findet damit ein Druckausgleich des Kraftstoffbehälters während des Betankens des Kraftfahrzeuges und während des Betriebs der Brennkraftmaschine des Kraftfahrzeuges statt.

Nachteilig bei der bekannten Entlüftungseinrichtung ist, daß der Kraftstoffbehälter mit der Entlüftungseinrichtung eine sehr große Oberfläche aufweist. Über die sehr große Oberfläche kann beispielsweise durch Diffusion durch die Wandung der Leitungen besonders viel Kraftstoff in die Umwelt gelangen. Ferner gibt es mehrere Verbindungsleitungen, z. B. Betankungsentlüftung, Betriebsentlüftung und damit mehrere Verbindungsstellen durch die Kraftstoffdampf diffundienen kann und somit die Einhaltung der Emissionsgesetzgebung unmöglich macht.

Der Erfindung liegt das Problem zugrunde, eine Entlüftungseinrichtung der eingangs genannten Art so zu gestalten, daß durch sie besonders wenig Kraftstoffdämpfe in die Umgebung gelangen.

Dieses Problem wird erfindungsgemäß dadurch gelöst, daß die Ausgleichsbehälter im Tank integriert sind und daß die Leitungen, zumindest in einem außerhalb des Kraftstoffbehälters befindlichen Teilbereich, eine aneinandergrenzende Wandung aufweisen.

Durch diese Gestaltung haben die beiden Leitungen in dem Teilbereich eine gemeinsame Außenwandung und damit eine gemeinsame Gesamtoberfläche. Durch die Reduzierung der Leitungsoberfläche und der Anzahl der Verbindungsstelle wird eine Verminderung der Permeation erreicht.

Zur weiteren Verringerung des Entweichens von Kraftstoffdämpfen trägt es gemäß einer vorteilhaften Weiterbildung der Erfindung bei, wenn die gemeinsame Außenwandung der beiden Leitungen im wesentlichen zylindrisch gestaltet ist. Hierdurch haben die beiden Leitungen eine besonders kleine gemeinsame Oberfläche.

Zur weiteren Verringerung des Entweichens von Kraftstoffdämpfen trägt es gemäß einer vorteilhaften Weiterbildung der Erfindung bei, wenn die Leitungen in dem außerhalb des Kraftstoffbehälters befindlichen Teilbereich einander umschließend angeordnet sind.

Bei ineinander geführten Leitungen gestaltet sich die Halterung der inneren Leitung gemäß einer anderen vorteilhaften Weiterbildung der Erfindung besonders einfach, wenn die innere Leitung über Stege mit der äußeren Leitung verbunden ist.

Die Fertigung der beiden Leitungen gestaltet sich gemäß einer anderen vorteilhaften Weiterbildung der Erfindung besonders kostengünstig, wenn die innere Leitung unmittelbar an der äußeren Leitung befestigt ist.

Beim Betanken wird in der Regel ein großer Volumenstrom an mit Kraftstoffdämpfen versetzter Luft aus dem Kraftstoffbehälter gefördert. Diese Luft kann gemäß einer anderen vorteilhaften Weiterbildung der Erfindung einfach entweichen, wenn die Leitung der Betankungsentlüftung einen größeren Durchmesser aufweist als die Leitung der Betriebsentlüftung.

Die beiden Leitungen könnten wie bei der bekannten Entlüftungseinrichtung jeweils zu dem Aktivkohlefilter geführt werden. Die erfindungsgemäße Entlüftungseinrichtung erfordert jedoch einen besonders geringen baulichen Aufwand, wenn die Leitung der Betriebsentlüftung in die Leitung der Betankungsentlüftung mündet.

Ein Eindringen von Kraftstoff von der Betriebs- in die Betankungsentlüftungsleitung läßt sich gemäß einer anderen vorteilhaften Weiterbildung der Erfindung einfach vermeiden, wenn die Mündung der Leitung der Betriebsentlüftung in die Leitung der Betankungsentlüftung in einer ein Überströmen von Kraftstoff bei einer vorgesehenen Schräglage des Kraftfahrzeuges vermeidenden Höhe angeordnet ist. Diese Leitungsanordnung hat zudem den Vorteil, daß Kraftstoff, der durch die Leitung der Betriebsentlüftung mitgerissen wird, durch die Leitung der Betankungsentlüftung zurücklaufen kann.

Eine fehlerhafte Strömung von Kraftstoffdämpfen in den Leitungen läßt sich gemäß einer anderen vorteilhaften Weiterbildung der Erfindung einfach vermeiden, wenn die Leitung der Betriebsentlüftung von einem Ventil verschließbar ist. Ein weiterer Vorteil dieser Gestaltung besteht darin, daß bei einem Verschließen der Betriebsentlüftung während des Tankvorganges ein Verdrängen der Luft in der Leitung der Betriebsentlüftung und damit ein Überfüllen des Kraftstoffbehälters vermieden wird. Das Ventil kann elektromagnetisch, mechanisch geschaltet oder durch die hohe Strömungsgeschwindigkeit in der Betriebs- oder Betankungsentlüftung betätigt werden.

Zur weiteren Verringerung des Entweichens von Kraftstoffdämpfen trägt es gemäß einer vorteilhaften Weiterbildung der Erfindung bei, wenn ein in einer der Leitungen angeordneter Ausgleichsbehälter mit der anderen Leitung oder einem in der anderen Leitung angeordneten Ausgleichsbehälter eine gemeinsame Wandung aufweist.

Ein unmittelbares Entweichen von Kraftstoffdämpfen aus den Ausgleichsbehältern in die Umwelt läßt sich gemäß einer anderen vorteilhaften Weiterbildung der Erfindung zuverlässig verhindern, wenn die Ausgleichsbehälter innerhalb des Kraftstoffbehälters angeordnet sind. Die Verbindungsstellen der Leitungen an den Ausgleichsbehältern lassen sich damit ebenfalls innerhalb des Kraftstoffbehälters anordnen. Dies führt zu einer weiteren Verringerung des Entweichens von Kraftstoffdämpfen.

Die erfindungsgemäße Entlüftungseinrichtung gestaltet sich konstruktiv besonders einfach, wenn die innerhalb des Kraftstoffbehälters angeordneten Ausgleichsbehälter untereinander angeordnet sind und wenn die Leitung der Betriebsentlüftung durch den Ausgleichsbehälter der Betankungsentlüftung geführt ist. Hierdurch können die Leitungen direkt ab den Ausgleichsbehältern einander umschließend gestaltet sein. Die Ausgleichsbehälter und die Leitungen sind damit als besonders einfach zu hantierende Einheit gestaltet. Die Leitungen können beispielsweise mit den Ausgleichsbehältern verschraubt oder an diesen im Schweißverfahren befestigt werden.

Die Erfindung läßt zahlreiche Ausführungsformen zu. Zur weiteren Verdeutlichung ihres Grundprinzips sind zwei davon in der Zeichnung dargestellt und werden nachfolgend beschrieben. Diese zeigt in
- Fig. 1: eine schematische Schnittdarstellung durch einen Kraftstoffbehälter mit einer erfindungsgemäßen Entlüftungseinrichtung,
- Fig.2: eine Schnittdarstellung durch Leitungen der erfindungsgemäßen Entlüftungseinrichtung aus Figur 1 entlang der Linie II - II,
- Fig.3: eine weitere Ausführungsform von Leitungen in einem Querschnitt.

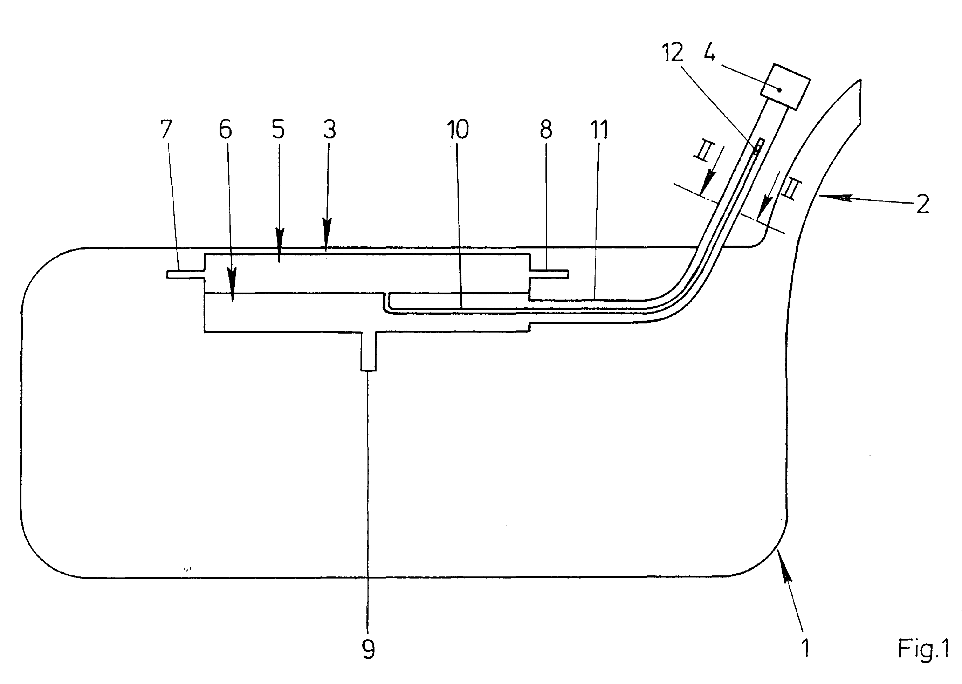

Figur 1 zeigt schematisch einen Kraftstoffbehälter 1 für ein Kraftfahrzeug mit einem Einfüllstutzen 2 zum Einfüllen von Kraftstoff und mit einer Entlüftungseinrichtung 3. Die Entlüftungseinrichtung 3 hat einen außerhalb des Kraftstoffbehälters 1 angeordneten Aktivkohlefilter 4 und jeweils einen innerhalb des Kraftstoffbehälters befestigten Ausgleichsbehälter 5, 6 für eine Betriebsentlüftung und für eine Betankungsentlüftung. Der Ausgleichsbehälter 5 der Betriebsentlüftung ist oberhalb des Ausgleichsbehälters 6 der Betankungsentlüftung angeschlossen. An den Ausgleichsbehältern 5, 6 sind jeweils in den Kraftstoffbehälter 1 führende Leitungen 7-8 und aus dem Kraftstoffbehälter 1 herausführende Leitungen 10, 11, sowie zur Füllstandsbegrenzung ein Tauchrohr angeschlossen. Die aus dem Kraftstoffbehälter 1 herausführende Leitung 11 der Betankungsentlüftung hat einen größeren Durchmesser als die Leitung 10 der Betriebsentlüftung und ist bis zu dem Aktivkohlefilter 4 geführt. Die Leitung 11 der Betriebsentlüftung ist von dem Ausgleichsbehälter 5 der Betriebsentlüftung durch den Ausgleichsbehälter 6 der Betankungsentlüftung und durch einen Teilbereich der außerhalb des Kraftstoffbehälters 1 verlaufenden Leitung 11 der Betankungsentlüftung geführt. In dem unmittelbar vor dem Aktivkohlefilter 4 angeordneten freien Ende der Leitung 10 der Betriebsentlüftung ist ein Ventil 12 angeordnet. Das Ventil 12 kann beim Betanken beispielsweise mechanisch, elektromagnetisch oder durch eine Luftströmung geschlossen werden.

Die freien Enden der innerhalb des Kraftstoffbehälters 1 angeordneten Leitungen 7, 8 der Betriebsentlüftung und das Tauchrohr können mit nicht dargestellten Sperrventilen versehen sein. Mittels der Sperrventile lassen sich die Leitungen 7, 8 und des Tauchrohres entsprechend dem vorgesehenen Betriebszustand des Kraftfahrzeuges sperren oder freigeben.

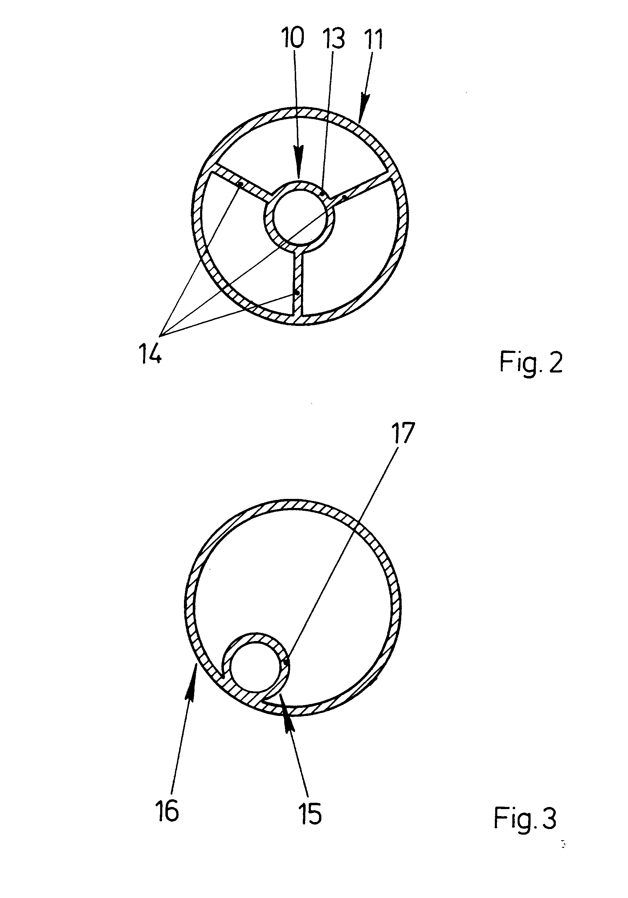

Figur 2 zeigt die außerhalb des in Figur 1 dargestellten Krafstoffbehälters 1 angeordneten Leitungen 10, 11 der Betriebsentlüftung und der Betankungsentlüftung in einer Schnittdarstellung entlang der Linie II - II. Hierbei ist zu erkennen, daß die Leitung 11 der Betankungsentlüftung die Leitung 10 der Betriebsentlüftung konzentrisch umschließt. Eine Wandung 13 der Leitung 10 der Betriebsentlüftung trennt damit die beiden Leitungen. Diese Wandung 13 hat damit keinen Kontakt mit der Umgebung, so daß keine Kraftstoffdämpfe unmittelbar durch diese Wandung 13 in die Umgebung gelangen können. Die Leitung 10 der Betriebsentlüftung wird mittels Stege 14 an der Leitung 11 der Betankungsentlüftung gehalten.

Figur 3 zeigt eine weitere Ausführungsform zweier miteinander verbundener Leitungen 15, 16 der Betriebsentlüftung und der Betankungsentlüftung aus Figur 1. Hierbei ist die querschnittskleine Leitung 15 der Betriebsentlüftung unmittelbar an der Leitung 16 der Betankungsentlüftung befestigt. Die beiden Leitungen 15, 16 haben hierdurch einen gemeinsamen Teilbereich einer Wandung 17, welche keinen Kontakt mit der Umgebung hat. Es ist jedoch auch denkbar, die Leitung 10 als eigenständige Leitung innerhalb der Betankungsentlüftung nur am Ausgang der Betriebsentlüftung zu fixieren.

## Patentansprüche

1. Entlüftungseinrichtung für einen Kraftstoffbehälter eines Kraftfahrzeuges mit jeweils einer aus dem Kraftstoffbehälter heraus geführten Leitung für eine Betriebsentlüftung und für eine Betankungsentlüftung, **dadurch gekennzeichnet, daß** die Leitungen (10, 11, 15, 16) zumindest in einem außerhalb des Kraftstoffbehälters (1) befindlichen Teilbereich eine aneinandergrenzende Wandung (13, 17) aufweisen.

2. Entlüftungseinrichtung nach Anspruch 1, **dadurch gekennzeichnet, daß** die Außenwandung der beiden Leitungen (10, 11, 15, 16) im wesentlichen zylindrisch gestaltet ist.

3. Entlüftungseinrichtung nach Anspruch 1 oder 2, **dadurch gekennzeichnet, daß** die Leitungen (10, 11) in dem außerhalb des Kraftstoffbehälters befindlichen Teilbereich einander umschließend angeordnet sind.

4. Entlüfungseinrichtung nach zumindest einem der Ansprüche 1 bis 3, **dadurch gekennzeichnet, daß** die Leitungen eine gemeinsame Wandung aufweisen.

5. Entlüftungseinrichtung nach zumindest einem der vorhergehenden Ansprüche, **dadurch gekennzeichnet, daß** die innere Leitung (10) über Stege (14) mit der äußeren Leitung (11) verbunden ist.

6. Entlüftungseinrichtung nach zumindest einem der vorhergehenden Ansprüche, **dadurch gekennzeichnet, daß** die innere Leitung (15) unmittelbar an der äußeren Leitung (16) befestigt ist.

7. Entlüftungseinrichtung nach zumindest einem der vorhergehenden Ansprüche, **dadurch gekennzeichnet, daß** die Leitung (11, 16) der Betankungsentlüftung einen größeren Durchmesser aufweist als die Leitung (10, 15) der Betriebsentlüftung.

8. Entlüftungseinrichtung nach zumindest einem der vorhergehenden Ansprüche, **dadurch gekennzeichnet, daß** die Leitung (10, 15) der Betriebsentlüftung in die Leitung (11, 16) der Betankungsentlüftung mündet.

9. Entlüftungseinrichtung nach zumindest einem der vorhergehenden Ansprüche, **dadurch gekennzeichnet, daß** die Mündung der Leitung (10, 15) der Betriebsentlüftung in die Leitung (11, 16) der Betankungsentlüftung in einer ein Überströmen von Kraftstoff bei einer vorgesehenen Schräglage des Kraftfahrzeuges vermeidenden Höhe angeordnet ist.

10. Entlüftungseinrichtung nach zumindest einem der vorhergehenden Ansprüche, **dadurch gekennzeichnet, daß** die Leitung (10, 15) der Betriebsentlüftung von einem Ventil (12) verschließbar ist.

11. Entlüftungseinrichtung nach zumindest einem der vorhergehenden Ansprüche, **dadurch gekennzeichnet, daß** ein in einer der Leitungen (10, 11, 15, 16) angeordneter Ausgleichsbehälter (5, 6) mit der anderen Leitung (10, 11, 15, 16) oder einem in der anderen Leitung (10, 11, 15, 16) angeordneten Ausgleichsbehälter (5, 6) eine gemeinsame Wandung aufweist.

12. Entlüftungseinrichtung nach zumindest einem der vorhergehenden Ansprüche, **dadurch gekennzeichnet, daß** die Ausgleichsbehälter (5, 6) innerhalb des Kraftstoffbehälters (1) angeordnet sind.

13. Entlüftungseinrichtung nach zumindest einem der vorhergehenden Ansprüche, **dadurch gekennzeichnet, daß** die innerhalb des Kraftstoffbehälters (1) angeordneten Ausgleichsbehälter (5, 6) untereinander angeordnet sind und daß die Leitung (10) der Betriebsentlüftung durch den Ausgleichsbehälter (6) der Betankungsentlüftung geführt ist.
